# EUROPÄISCHE PATENTSCHRIFT

(11) **EP 3 632 970 B1**
(45) Veröffentlichungstag und Bekanntmachung des Hinweises auf die Patenterteilung: **27.04.2022**
(21) Anmeldenummer: 18198709.0
(22) Anmeldetag: 04.10.2018
(51) Int. Cl.: C08J 9/00, C08J 9/12, C08J 9/14

(54) **VERFAHREN ZUR KONTINUIERLICHEN HERSTELLUNG EINES TEILKRISTALLINEN THERMOPLASTISCHEN POLYMERSCHAUMS**
METHOD FOR THE CONTINUOUS PRODUCTION OF A PARTLY-CRYSTALLINE THERMOPLASTIC POLYMER FOAM
PROCÉDÉ DE FABRICATION EN CONTINU D'UNE MOUSSE DE POLYMÈRE THERMOPLASTIQUE PARTIELLEMENT CRISTALLINE

(43) Veröffentlichungstag der Anmeldung: 08.04.2020
(73) Patentinhaber: BASF SE, 67056 Ludwigshafen am Rhein (DE)
(72) Erfinder: SCHERZER, Dietrich, 67056 Ludwigshafen (DE); DIETZEN, Franz-Josef, 67056 Ludwigshafen (DE)

(56) Entgegenhaltungen:
- EP-A1- 3 202 829
- JP-A- 2008 088 207
- US-A1- 2015 376 363

## Beschreibung

Die vorliegende Erfindung betrifft ein Verfahren zur kontinuierlichen Herstellung eines teilkristallinen thermoplastischen Polymerschaums (TTS) durch Extrusion einer Mischung (M). Die Mischung (M) enthält mindestens ein teilkristallines thermoplastisches Polymer (TTP), mindestens ein Treibmittel (T) und mindestens 8 Gew.-%, bezogen auf das Gesamtgewicht der Mischung (M), mindestens eines mineralischen Füllstoffs (F). Weiterhin betrifft die vorliegende Erfindung den teilkristallinen thermoplastischen Polymerschaum (TTS) als solchen, sowie dessen Verwendung zur Herstellung von Folien, Profilen oder Platten.

Verfahren zur kontinuierlichen Herstellung von amorphen thermoplastischen Polymerschäumen sind aus dem Stand der Technik bereits bekannt. Sie werden im Allgemeinen durch Extrusion einer treibmittelhaltigen Schmelze der entsprechenden amorphen thermoplastischen Polymere hergestellt und weisen eine Dichte von < 200 g/l auf.

So offenbart DE 44 45 140 A1 beispielsweise ein Verfahren zur Herstellung eines schaumförmigen Styrolpolymerisats aus einem durch Extrusion aufgeschäumten und gegebenenfalls weiterverarbeiteten Styrolhomo- oder copolymeren und einem Treibmittel, das im Wesentlichen aus Kohlendioxid besteht. Das schaumförmige Styrolpolymerisat weist eine Dichte im Bereich von 30 bis 200 g/l auf.

DE 101 62 602 A1 betrifft ein Verfahren zur Herstellung von Schaumstoffbahnen durch Schaumextrusion einer Mischung aus einem Polysulfon oder einem Polyethersulfon und 1 bis 10 Gew.-%, bezogen auf den Thermoplasten, eines flüchtigen Treibmittels, wobei das Treibmittel Wasser oder eine Mischung von Wasser mit einer organischen Flüssigkeit ist. Die hergestellten Schaumstoffbahnen weisen eine Dichte im Bereich von 45 bis 180 g/l auf.

Nachteilig bei den oben genannten Verfahren ist jedoch, dass mit ihnen keine teilkristallinen thermoplastischen Polymerschäume niedriger Dichte hergestellt werden können, da die teilkristallinen thermoplastischen Polymerschäume nach der Extrusion sofort irreversibel schrumpfen und dadurch eine zu hohe Dichte aufweisen. Das irreversible Schrumpfen ist auf die niedrige Schmelzviskosität der noch nicht kristallisierten Polymerschmelze zurückzuführen, wodurch diese nach Abkühlen und/oder nach Entweichen des Treibmittels aus den Zellen dem Überdruck der Umgebungsluft nicht mehr standhalten kann.

Es besteht daher ein Bedarf an einem Verfahren zur kontinuierlichen Herstellung eines teilkristallinen thermoplastischen Polymerschaums, das die zuvor beschriebenen Nachteile nicht oder in vermindertem Maße aufweist.

EP 3 202 829 A1, US 2015/0376363 A1 und JP 2008 88207 A offenbaren Verfahren zur Herstellung eines teilkristallinen thermoplastischen Polymerschaums durch Extrusion einer Mischung, die ein Treibmittel und einen mineralischen Füllstoff enthält.

Die der vorliegenden Erfindung zugrunde liegende objektive technische Aufgabe besteht somit in der Bereitstellung eines neuen Verfahrens zur kontinuierlichen Herstellung eines teilkristallinen thermoplastischen Polymerschaums bzw. des teilkristallinen thermoplastischen Polymerschaums als solchem, wobei sich der hergestellte teilkristalline thermoplastische Polymerschaum durch eine niedrige Dichte auszeichnen soll.

Gelöst wird die Aufgabe durch ein Verfahren zur kontinuierlichen Herstellung eines teilkristallinen thermoplastischen Polymerschaums (TTS) durch Extrusion einer den Ansprüchen entsprechenden Mischung (M).

Es wurde überraschend festgestellt, dass durch die Zugabe von mindestens 8 Gew.-% mindestens eines mineralischen Füllstoffs (F) zu dem mindestens einen aufgeschmolzenen teilkristallinen thermoplastischen Polymer (TTP) nach der Extrusion ein teilkristalliner thermoplastischer Polymerschaum (TTS) erhalten wird, der eine niedrige Dichte, vorzugsweise eine Dichte von < 200 g/l, aufweist. Der nach der Extrusion erhaltene erfindungsgemäße teilkristalline thermoplastische Polymerschaum (TTS) weist zudem nach Abkühlen und/oder nach Entweichen des Treibmittels keinerlei Schrumpfung auf, sondern behält seine durch die Extrusion erhaltene Form bei.

Darüber hinaus lassen sich aus dem erfindungsgemäßen teilkristallinen thermoplastischen Polymerschaum (TTS) einfach und kostengünstig Folien, Profile oder Platten herstellen.

Im Rahmen der vorliegenden Erfindung wird unter den Begriffen "teilkristallines thermoplastisches Polymer" oder "teilkristalliner thermoplastischer Polymerschaum" Folgendes verstanden. Teilkristalline thermoplastische Polymere, auch teilkristalline Thermoplasten genannt, sind Polymere, die sowohl kristalline als auch amorphe Bereiche (Domänen) enthalten. Wird die Schmelze eines teilkristallinen thermoplastischen Polymers abgekühlt, so bewegen sich die im Polymer enthaltenen Polymerketten immer weniger und beginnen sich regelmäßig anzuordnen (zu kristallisieren). Da sie aber ineinander verschlauft sind, kann dieser Prozess nicht im ganzen Polymer stattfinden, sondern nur in Domänen. Im Rest des Polymers erstarren die Ketten ungeordnet (amorph). Die teilkristallinen thermoplastischen Polymere (TTP) erweichen in der Regel in einem höheren Temperaturbereich (der Schmelztemperatur) als amorphe thermoplastische Polymere.

Nachfolgend werden das erfindungsgemäße Herstellungsverfahren des teilkristallinen thermoplastischen Polymerschaums (TTS) sowie der erfindungsgemäße teilkristalline thermoplastische Polymerschaum (TTS) als solcher näher definiert.

Der teilkristalline thermoplastische Polymerschaum (TTP) wird durch Extrusion einer Mischung (M) erhalten.

Die Mischung (M) enthält mindestens ein teilkristallines thermoplastisches Polymer (TTP) als Komponente.

Im Rahmen der vorliegenden Erfindung wird unter dem Begriff "mindestens ein teilkristallines thermoplastisches Polymer (TTP)" genau ein teilkristallines thermoplastisches Polymer (TTP) sowie Mischungen aus zwei und mehr teilkristallinen thermoplastischen Polymeren (TTP) verstanden. In einer bevorzugten Ausführungsform wird im erfindungsgemäßen Verfahren genau ein teilkristallines thermoplastisches Polymer (TTP) eingesetzt.

Das mindestens eine teilkristalline thermoplastische Polymer (TTP) weist vorzugsweise eine Schmelzenthalpie ΔH _{(TTP)} von größer als 50 J/g, bevorzugt von größer als 100 J/g und mehr bevorzugt von größer als 150 J/g auf, jeweils gemessen mittels dynamischer Differenzkalorimetrie (differential scanning calorimetry; DSC) gemäß ISO 11357-4:2014.

Weiterhin weist das mindestens eine teilkristalline thermoplastische Polymer (TTP) vorzugsweise eine Schmelzenthalpie ΔH_{(TTP)} von weniger als 600 J/g, bevorzugt von weniger als 400 J/g und mehr bevorzugt von weniger als 300 J/g auf, jeweils gemessen mittels dynamischer Differenzkalorimetrie (differential scanning calorimetry; DSC) gemäß ISO 11357-4:2014.

Geeignete teilkristalline thermoplastische Polymere (TTP) weisen vorzugsweise eine Viskositätszahl (VZ_{(TTP)}) im Bereich von 90 bis 350 ml/g, bevorzugt im Bereich von 100 bis 275 ml/g und mehr bevorzugt im Bereich von 110 bis 250 ml/g, auf, bestimmt in einer 0,5 Gew.-%igen Lösung von 96 Gew.-%iger Schwefelsäure bei 25 °C, gemessen gemäß ISO 307:2013-8.

Das mindestens eine teilkristalline thermoplastische Polymer (TTP) weist vorzugsweise eine Schmelztemperatur (T_{M}) auf, bevorzugt eine Schmelztemperatur (T_{M}) von > 100 °C, mehr bevorzugt eine Schmelztemperatur (T_{M}) von > 150 °C, besonders bevorzugt eine Schmelztemperatur (T_{M}) von > 200 °C, bestimmt nach ISO 11357-3:2014.

Vorzugsweise liegt die Schmelztemperatur (T_{M}) des mindestens einen teilkristallinen thermoplastischen Polymers (TTP) im Bereich von 100 bis 350 °C, bevorzugt im Bereich von 150 bis 300 °C und mehr bevorzugt im Bereich von 200 bis 275 °C, bestimmt nach ISO 11357-3:2014.

Die Schmelzviskosität des mindestens einen teilkristallinen thermoplastischen Polymers (TTP) liegt vorzugsweise im Bereich 10¹ bis 10³ Pa x s, gemessen bei einer Schergeschwindigkeit zwischen 10² und 10³ 1/s gemäß ISO 11443: 2005-03.

Das mindestens eine teilkristalline thermoplastische Polymer (TTP) weist üblicherweise eine Glasübergangstemperatur (T_{G}) auf, bevorzugt eine Glasübergangstemperatur (T_{G}) von < 100 °C, mehr bevorzugt von < 80 °C, und besonders bevorzugt von < 60 °C, bestimmt durch dynamische Differenzkalorimetrie (Differential Scanning Calorimetry; DSC) bei einer Heiz- und Kühlrate von 10 °C/min.

Weiterhin weist das mindestens eine teilkristalline thermoplastische Polymer (TTP) bevorzugt eine Glasübergangstemperatur (T_{G}) von > -100 °C, mehr bevorzugt von > -50 °C, und besonders bevorzugt von > 0 °C auf, bestimmt durch dynamische Differenzkalorimetrie (Differential Scanning Calorimetry; DSC) bei einer Heiz- und Kühlrate von 10 °C/min.

Geeignete teilkristalline thermoplastische Polymere (TTP) weisen ein gewichtsmittleres Molekulargewicht (M_{W}) im Bereich von 500 bis 2 000 000 g/mol auf, bevorzugt im Bereich von 10 000 bis 90 000 g/mol und insbesondere bevorzugt im Bereich von 20 000 bis 70 000 g/mol. Das gewichtsmittlere Molekulargewicht (M_{W}) wird bestimmt mittels SEC-MALLS (Size Exclusion Chromatography-Multi-Angle Laser Light Scattering) nach Chi-san Wu "Handbook of size exclusion chromatography and related techniques", Seite 19.

Das mindestens eine teilkristalline thermoplastische Polymer (TTP) ist vorzugsweise ausgewählt aus der Gruppe bestehend aus Polyamiden, Polyestern, Polycarbonaten, Polyolefinen, Polyurethanen, Polyethern und Polyoxymethylen, mehr bevorzugt aus Polyestern und Polyamiden, besonders bevorzugt aus Polyamiden.

Ist das mindestens eine teilkristalline thermoplastische Polymer (TTP) aus Polyamiden ausgewählt, sind beispielsweise teilkristalline thermoplastische Polyamide geeignet, die sich von Lactamen mit 4 bis 12 Ringgliedern ableiten. Weiterhin sind teilkristalline thermoplastische Polyamide geeignet, die durch Umsetzung von Dicarbonsäuren mit Diaminen erhalten werden. Als mindestens ein teilkristallines thermoplastisches Polyamid, das sich von Lactam ableitet, sind beispielhaft Polyamide erwähnt, die sich von Polycaprolactam, Polycapryllactam und/oder Polylaurinlactam ableiten.

Für den Fall, dass mindestens ein teilkristallines thermoplastisches Polyamid eingesetzt wird, das aus Dicarbonsäuren und Diaminen erhältlich ist, können als Dicarbonsäuren Alkandicarbonsäuren mit 6 bis 12 Kohlenstoffatomen eingesetzt werden. Darüber hinaus sind aromatische Dicarbonsäuren geeignet.

Beispielhaft seien hier Adipinsäure, Azelainsäure, Sebacinsäure und Dodecandicarbonsäure als Dicarbonsäuren genannt.

Als Diamine eignen sich beispielsweise Alkandiamine mit 4 bis 12 Kohlenstoffatomen sowie aromatische oder zyklische Diamine, wie beispielsweise m-Xylylendiamin, Di-(4-Aminophenyl)Methan, Di-(4-Aminocyclohexyl)-Methan, 2,2-Di-(4-aminophenyl)-Propan oder 2,2-Di-(4-Aminocyclohexyl)-Propan.

Bevorzugt als teilkristalline thermoplastische Polyamide sind Polycaprolactam (Polyamid 6) sowie Copolyamid 6/66 (Polyamid 6/6.6). Copolyamid 6/66 weist vorzugsweise einen Anteil von 5 bis 95 Gew.-% an Caprolactameinheiten auf, bezogen auf das Gesamtgewicht des Copolyamids 6/66.

Weiterhin als mindestens ein teilkristallines thermoplastisches Polymer (TTP) geeignet sind Polyamide, die durch Copolymerisation zweier oder mehrerer der vorstehend und nachstehend genannten Monomere erhältlich sind oder Mischungen mehrerer Polyamide, wobei das Mischungsverhältnis beliebig ist. Besonders bevorzugt sind Mischungen von Polyamid 6 mit anderen Polyamiden, insbesondere Copolyamid 6/66.

Weiterhin bevorzugt als teilkristallines thermoplastisches Polymer (TTP) sind Polyamid 66 und Polyamid 6.10.

Die nachfolgende, nicht abschließende Aufstellung enthält die vorstehend genannten sowie weitere geeignete teilkristalline thermoplastische Polyamide sowie die enthaltenen Monomere.

AB-Polymere:
- PA 4: Pyrrolidon
- PA 6: ε-Caprolactam
- PA 7: Enantholactam
- PA 8: Capryllactam
- PA 9: 9-Aminopelargonsäure
- P 11: 11-Aminoundecansäure
- P 12: Laurinlactam

AA/BB-Polymere:
- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA MXD6: m-Xylyendiamin, Adipinsäure
- PA 6/66: (siehe PA 6 und PA 66)
- PA 6/12: (siehe PA 6 und PA 12)
- PA 6/6.36: ε-Caprolactam, Hexamethylendiamin, C36-Dimersäure
- PA 6T/6: (siehe PA 6T und PA 6)

Bevorzugt ist das mindestens eine teilkristalline thermoplastische Polyamid ausgewählt aus der Gruppe bestehend aus PA 4, PA 6, PA 7, PA 8, PA 9, PA 11, PA 12, PA 46, PA 66, PA 69, PA 6.10, PA 6.12, PA 6.13, PA 6/6.36, PA 6T/6, PA 12.12, PA 13.13, PA 6T, PA MXD6, PA 6/66, PA 6/12 und Copolyamiden aus diesen.

Am meisten bevorzugt ist das mindestens eine teilkristalline thermoplastische Polyamid ausgewählt aus der Gruppe bestehend aus Polyamid 6, Polyamid 12 und Polyamid 6/66 sowie Polyamid 6.10 und Polyamid 66.

Ist das mindestens eine teilkristalline thermoplastische Polymer (TTP) aus Polyestern ausgewählt, sind beispielsweise teilkristalline thermoplastische Terephthalat-Polyester geeignet.

Beispiele für teilkristalline thermoplastische Terephthalat-Polyester sind Polyethylenterephthalat (PET), Polytrimethylenterephthalat (PTT) oder Polybutylenterephthalat (PBT).

Die teilkristallinen thermoplastischen Terephthalat-Polyester können nach allen dem Fachmann bekannten Methoden hergestellt werden.

In einer bevorzugten Ausführungsform werden die teilkristallinen thermoplastischen Terephthalat-Polyester hergestellt durch Polykondensation von Diolen und Terephthalsäure(-Derivate)n.

Geeignete Diole zur Herstellung der teilkristallinen thermoplastischen Terephthalat-Polyester sind beispielsweise aliphatische 1, ω-Diole.

Aliphatische 1, ω-Diole sind dem Fachmann prinzipiell bekannt.

Beispiele für aliphatische 1, ω-Diole sind Ethylenglycol, 1,3-Propandiol, 1,4-Butandiol, 1,5-Pentandiol, 1,6-Hexandiol, 2,2-Dimethyl-1,3-Propandiol, 2-Ethyl-2-Butyl-1,3-Propandiol, 2-Ethyl-2-Isobutyl-1,3-Propandiol, 1,4-Cyclohexan-dimethanol oder 2,2,4-Trimethyl-1,6-Hexandiol.

Unter Terephthalsäure(-Derivate)n werden im Rahmen der vorliegenden Erfindung die Terephthalsäure selbst sowie Derivate der Terephthalsäure, wie Terephthalsäureester, verstanden. Als Terephthalsäureester kommen dabei die Di-C₁C₆-Alkylester der Terephthalsäure, zum Beispiel die Dimethyl-, Diethyl-, Di-n-propyl-, Di-iso-propyl-, Di-n-butyl-, Di-iso-butyl-, Di-t-butyl-, Di-n-pentyl-, Di-iso-pentyl- oder Di-n-hexylester der Terephthalsäure, in Betracht.

Die Terephthalsäure oder deren Derivate können einzeln oder als Gemisch aus zwei und mehr davon eingesetzt werden. Besonders bevorzugt werden Terephthalsäure oder Dimethylterephthalat verwendet.

Polyethylenterephthalat (PET) wird beispielsweise aus Terephthalsäure und Ethylenglycol hergestellt, Polybutylenterephthalat (PBT) aus Terephthalsäure und 1,4-Butandiol. Beispiele für kommerziell erhältliche Polybutylenterephthalate (PBT) sind Ultradur B 4520^{®} und Ultradur B 2550 FC^{®} des Herstellers BASF SE in Ludwigshafen.

Vorzugsweise ist der als mindestens ein teilkristallines thermoplastisches Polymer (TTP) eingesetzte Terephthalat-Polyester ein Polyethylenterephthalat (PET) und/oder ein Polybutylenterephthalat (PBT), insbesondere bevorzugt ist der Terephthalat-Polyester ein Polyethylenterephthalat (PET).

Ist das mindestens eine teilkristalline thermoplastische Polymer (TTP) aus Polycarbonaten ausgewählt, sind beispielsweise teilkristalline thermoplastische Polycarbonate auf Basis von Bisphenol A geeignet.

Die Polycarbonate können nach allen dem Fachmann bekannten Methoden hergestellt werden.

In einer bevorzugten Ausführungsform werden die Polycarbonate hergestellt durch Polykondensation von Phosgen mit Diolen. Sie können aber auch über eine Umesterung von Diolen mit Kohlensäurediestern hergestellt werden.

Geeignete teilkristalline thermoplastische Polyolefine sind beispielsweise Polyethylen und/oder Polypropylen.

Als teilkristalline thermoplastische Polymere sind beispielsweise auch Polyurethane geeignet.

Methoden zur Herstellung teilkristalliner thermoplastischer Polyurethane sind dem Fachmann bekannt. Teilkristalline thermoplastische Polyurethane werden in der Regel durch Polyaddition von Diisocyanaten und Diolen hergestellt.

Als Diisocyanate können dabei beispielsweise 2,4- und 2,6-Toluoldiisocynate (TDI), 1,6-Hexamethylendiisocyanat (HDI), Isophorondiisocyanat (IPDI), 4,4-Diphenylmethylendiisocyanat (MDI) sowie Naphthalendiisocyanat (NDI) eingesetzt werden.

Als Diole können kurzkettige Diole wie Butandiol, Hexandiol und aromatische Diole eingesetzt werden.

Als teilkristalline thermoplastische Polymere sind beispielsweise auch Polyether geeignet.

Beispiele für geeignete Polyether sind Polyethylenglycol und Polypropylenglycol, die beide durch katalytische Polymerisation der entsprechenden Epoxide Ethylenoxid beziehungsweise Propylenoxid hergestellt werden.

Als teilkristallines thermoplastisches Polymer (TTP) kann beispielsweise auch Polyoxymethylen eingesetzt werden.

Dabei umfasst der Begriff "Polyoxymethylen" im Rahmen der vorliegenden Erfindung sowohl ein Polyoxymethylen-Homo- als auch ein Polyoxymethylen-Co-Polymer.

Polyoxymethylen-Homo-Polymere werden üblicherweise hergestellt durch Polymerisation von Formaldehyd. Die Polyoxymethylen-Co-Polymere werden beispielsweise durch Copolymerisation von Formaldehyd mit cyclischen Ethern hergestellt

Die Mischung (M) enthält im Bereich von 45 bis 87 Gew.-% des mindestens einen teilkristallinen thermoplastischen Polymers (TTP), bezogen auf das Gesamtgewicht der Mischung (M), bevorzugt im Bereich von 57,5 bis 82 Gew.-%, mehr bevorzugt im Bereich von 67,5 bis 82 Gew.-%.

Die Mischung (M) enthält zudem mindestens ein Treibmittel (T) als Komponente. Im Rahmen der vorliegenden Erfindung wird unter dem Begriff mindestens ein Treibmittel (T) genau ein Treibmittel (T) sowie Mischungen aus zwei und mehr Treibmitteln (T) verstanden. In einer bevorzugten Ausführungsform wird im erfindungsgemäßen Verfahren genau ein Treibmittel (T) eingesetzt Treibmittel (T) als solche sind dem Fachmann bekannt.

Im Rahmen der vorliegenden Erfindung werden vorzugsweise physikalische Treibmittel eingesetzt. Das mindestens eine Treibmittel (T) ist vorzugsweise ausgewählt aus der Gruppe bestehend aus Wasser, aliphatischen Alkoholen, aliphatischen Ketonen und Kohlenstoffdioxid, bevorzugt aus Wasser, aliphatischen Alkoholen und aliphatischen Ketonen.

Beispiele für geeignete aliphatische Alkohole, die als Treibmittel (T) eingesetzt werden können sind Methanol, Ethanol, Propanol, Isopropylalkohol und Butanol. Beispiele für geeignete aliphatische Ketone sind Aceton und Methylethylketon.

Die Mischung (M) enthält mindestens 5 Gew.-%, bevorzugt mindestens 8 Gew.-%, bezogen auf das Gesamtgewicht der Mischung (M), des mindestens einen Treibmittels (T).

Weiterhin enthält die Mischung (M) höchstens 20 Gew.-%, bevorzugt höchstens 17,5 Gew.-%, bezogen auf das Gesamtgewicht der Mischung (M), des mindestens einen Treibmittels (T).

Die Mischung (M) enthält somit im Bereich von 5 bis 20 Gew.-% des mindestens einen Treibmittels (T), bezogen auf das Gesamtgewicht der Mischung (M), bevorzugt im Bereich von 8 bis 17,5 Gew.-%.

Die Mischung (M) enthält weiterhin mindestens ein Füllstoff (F) als Komponente. Im Rahmen der vorliegenden Erfindung wird unter dem Begriff mindestens ein Füllstoff (F) genau ein Füllstoff (F) sowie Mischungen aus zwei und mehr Füllstoffen (F) verstanden. In einer bevorzugten Ausführungsform wird im erfindungsgemäßen Verfahren genau ein Füllstoff (F) eingesetzt.

Füllstoffe als solche sind dem Fachmann bekannt.

Im Rahmen der vorliegenden Erfindung sind die Füllstoffe (F) vorzugsweise ausgewählt aus der Gruppe bestehend aus Carbonaten, Silicaten, Phosphaten und Sulfaten.

Beispiele für Carbonate, die im Rahmen der vorliegenden Erfindung als Füllstoffe (F) eingesetzt werden können, sind Calciumcarbonate oder Magnesiumcarbonate. Sie können beispielsweise in Form von Kreide, Calcid, Marmor und Dolomit eingesetzt werden.

Beispiele für Silicate, die im Rahmen der vorliegenden Erfindung als Füllstoffe (F) eingesetzt werden können, sind Magnesiumsilicathydrate wie Talkum, Aluminiumsilicathydrate wie Kaolin und Ton sowie Kaliumaluminiumsilicathydrate wie Glimmer.

Beispiele für Phosphate, die als Füllstoffe eingesetzt werden können, sind Calciumphosphate und Magnesiumphosphate.

Als Sulfate können beispielsweise Bariumsulfate und Calciumsulfate wie Gips eingesetzt werden.

In einer bevorzugten Ausführungsform ist der mindestens eine Füllstoff (F) ausgewählt aus der Gruppe bestehend aus Calciumcarbonat, Gips und Talkum, besonders bevorzugt aus Calciumcarbonat und Talkum.

Der mindestens eine Füllstoff (F) ist vorzugsweise partikelförmig.

Er weist vorzugsweise eine mittlere Teilchengröße von ≤ 30 µm, bevorzugt von ≤ 15 µm, mehr bevorzugt von ≤ 10 µm auf. Die Teilchengröße wird bestimmt durch Siebanalyse nach DIN 66165.

Weiterhin weist der mindestens eine Füllstoff (F) vorzugsweise eine mittlere Teilchengröße von ≥ 1 µm, bevorzugt von ≥ 2 µm, auf. Die Teilchengröße wird bestimmt durch Siebanalyse nach DIN 66165.

Der mindestens eine Füllstoff (F) weist somit vorzugsweise eine mittlere Teilchengröße im Bereich von 1 µm bis 30 µm, bevorzugt im Bereich von 2 µm bis 15 µm, mehr bevorzugt im Bereich von 2 µm bis 10 µm, auf. Die Teilchengröße wird bestimmt durch Siebanalyse nach DIN 66165.

Die Mischung (M) enthält mindestens 8 Gew.-%, bezogen auf das Gesamtgewicht der Mischung (M), des mindestens einen mineralischen Füllstoffs (F), vorzugsweise mindestens 10 Gew.-%.

Weiterhin enthält die Mischung (M) höchstens 35 Gew.-%, bevorzugt höchstens 25 Gew.-%, besonders bevorzugt höchstens 15 Gew.-%, bezogen auf das Gesamtgewicht der Mischung (M), des mindestens einen mineralischen Füllstoffs (F).

Die Mischung (M) enthält somit im Bereich von 8 bis 35 Gew.-% des mindestens einen mineralischen Füllstoffs (F), bezogen auf das Gesamtgewicht der Mischung (M), bevorzugt im Bereich von 10 bis 25 Gew.-%, mehr bevorzugt im Bereich von 10 bis 15 Gew.-%.

Die Mischung (M) enthält die Komponenten
a) 45 bis 87 Gew.-% mindestens eines teilkristallinen thermoplastischen Polymers (TTP), bezogen auf das Gesamtgewicht der Mischung (M),
b) 5 bis 20 Gew.-% mindestens eines Treibmittels (T), bezogen auf das Gesamtgewicht der Mischung (M), und
c) 8 bis 35 Gew.-% mindestens eines mineralischen Füllstoffs (F), bezogen auf das Gesamtgewicht der Mischung (M).

In einer bevorzugten Ausführungsform enthält die Mischung (M) die Komponenten
a) 57,5 bis 82 Gew.-% mindestens eines teilkristallinen thermoplastischen Polymers (TTP), bezogen auf das Gesamtgewicht der Mischung (M),
b) 8 bis 17,5 Gew.-% mindestens eines Treibmittels (T), bezogen auf das Gesamtgewicht der Mischung (M), und
c) 10 bis 25 Gew.-% mindestens eines mineralischen Füllstoffs (F), bezogen auf das Gesamtgewicht der Mischung (M).

Besonders bevorzugt enthält die Mischung (M) die Komponenten
a) 67,5 bis 82 Gew.-% mindestens eines teilkristallinen thermoplastischen Polymers (TTP), bezogen auf das Gesamtgewicht der Mischung (M),
b) 8 bis 17,5 Gew.-% mindestens eines Treibmittels (T), bezogen auf das Gesamtgewicht der Mischung (M), und
c) 10 bis 15 Gew.-% mindestens eines mineralischen Füllstoffs (F), bezogen auf das Gesamtgewicht der Mischung (M).

Die Gewichtsprozente der Komponenten (TTP), (T) und (F) addieren sich üblicherweise zu 100 Gew.-%.

Das Verfahren zur kontinuierlichen Herstellung des teilkristallinen thermoplastischen Polymerschaums (TTS) umfasst vorzugsweise die folgenden Schritte:
a) Aufschmelzen des mindestens einen teilkristallinen thermoplastischen Polymers (TTP),
b) Mischen des mindestens einen aufgeschmolzenen teilkristallinen thermoplastischen Polymers (TTP) aus Schritt a) und des mindestens einen mineralischen Füllstoffs (F) unter Erhalt einer Polymermischung (PM),
c) Kontinuierliche Zudosierung des mindestens einen Treibmittels (T) zu der Polymermischung (PM) aus Schritt b),
d) Mischen des mindestens einen Treibmittels (T) und der Polymermischung (PM) unter Erhalt der Mischung (M),
e) Extrusion der Mischung (M) aus Schritt d) unter Erhalt eines teilkristallinen thermoplastischen Polymerschaums (TTS).

Das Aufschmelzen des mindestens einen teilkristallinen thermoplastischen Polymers (TTP) in Verfahrensschritt a) kann in sämtlichen dem Fachmann bekannten Vorrichtungen erfolgen. Bevorzugt wird Verfahrensschritt a) in einem Extruder durchgeführt.

Das mindestens eine teilkristalline thermoplastische Polymer (TTP) wird dann bevorzugt unter Verwendung entsprechender Dosiervorrichtungen beispielsweise als Granulat in den Extruder dosiert.

Dabei ist es möglich, dass Verfahrensschritt a) in dem gleichen Extruder durchgeführt wird wie die Verfahrensschritte b), c), d) und e), es ist jedoch auch möglich, dass Verfahrensschritt a) und die Verfahrensschritte b) bis e) jeweils in zwei separaten Extrudern durchgeführt werden.

Werden die Verfahrensschritte a) bis e) in einem Extruder durchgeführt, wird das erfindungsgemäße Verfahren zur kontinuierlichen Herstellung des teilkristallinen thermoplastischen Polymerschaums (TTS) in einer bevorzugten Ausführungsform in einem Extruder durchgeführt, der mindestens ein Mischsegment und mindestens ein Fördersegment umfasst. Das Mischsegment umfasst im Allgemeinen mindestens ein Mischelement, das Fördersegment umfasst im Allgemeinen mindestens ein Förderelement. Darüber hinaus umfasst der im erfindungsgemäßen Verfahren bevorzugt eingesetzte Extruder mindestens eine Lochdüse.

Geeignete Lochdüsen, Förderelemente und Mischelemente sind dem Fachmann bekannt.

Bevorzugt werden Doppelschneckenextruder eingesetzt, da durch Länge und Art der Schnecke, Temperatur und Verweilzeit im Extruder eine homogene Durchmischung erreicht werden kann.

Der Extruder kann neben dem mindestens einen Mischsegment, dem mindestens einen Fördersegment und der mindestens einen Lochdüse Stauzonen und Entgasungszonen aufweisen.

Der im erfindungsgemäßen Verfahren bevorzugt eingesetzte Extruder umfasst somit mindestens ein Mischsegment, an das sich mindestens ein Fördersegment anschließt, wobei sich an das mindestens eine Fördersegment die mindestens eine Lochdüse anschließt.

Verfahrensschritt a) wird dann vorzugsweise in dem mindestens einen Mischsegment durchgeführt.

Die Temperatur in Schritt a) wird vom Fachmann gewählt und richtet sich nach der Art der Komponente (TTP).

Im Allgemeinen wird Schritt a) bei einer Temperatur von 200 bis 380 °C, bevorzugt bei einer Temperatur von 220 bis 300 °C, mehr bevorzugt bei einer Temperatur von 230 bis 280 °C, durchgeführt.

Die Temperatur in Schritt a) wird in einer bevorzugten Ausführungsform am Mantel des Extruders gemessen, der das Mischsegment umgibt.

Vorzugsweise wird auch Verfahrensschritt b) in dem mindestens einen Mischsegment durchgeführt. Somit werden dann vorzugsweise die Komponenten (TTP) und (F) auch in dem mindestens einen Mischsegment unter Erhalt der Polymermischung (PM) gemischt.

Die Polymermischung (PM), die die Komponenten (TTP) und (F) enthält, weist vorzugsweise eine Schmelzviskosität im Bereich von 10² bis 10³ Pa x s auf, gemessen bei einer Schergeschwindigkeit zwischen 10² und 10³ 1/s gemäß ISO 11443: 2005-03.

Die Temperatur zum Mischen in Schritt b) wird ebenfalls vom Fachmann gewählt und richtet sich nach der Art der Komponenten (TTP) und (F).

Im Allgemeinen wird das Mischen in Schritt b) bei einer Temperatur von 200 bis 380 °C, bevorzugt bei einer Temperatur von 220 bis 300 °C, mehr bevorzugt bei einer Temperatur von 230 bis 280 °C, durchgeführt.

Die Temperatur in Schritt b) wird ebenfalls in einer bevorzugten Ausführungsform am Mantel des Extruders gemessen, der das Mischsegment umgibt.

Vorzugsweise wird zu der Polymermischung (PM) aus Schritt b) kontinuierlich mindestens ein Treibmittel (T) zudosiert. Verfahrensschritt c) erfolgt dabei ebenfalls vorzugsweise in dem mindestens einen Mischsegment.

Unter einer "kontinuierlichen Zudosierung" des mindestens einen Treibmittels (T) wird im Rahmen der vorliegenden Erfindung verstanden, dass die entsprechende Zudosierung über einen längeren Zeitraum, vorzugsweise über mindestens 50 %, mehr bevorzugt über mindestens 70 %, noch mehr bevorzugt über mindestens 90 %, insbesondere über die gesamte Dauer der Schritte c) bis e) erfolgt.

Das mindestens eine Treibmittel (T) und die Polymermischung (PM) werden vorzugsweise unter Erhalt der Mischung (M) gemischt (Schritt d). Das Mischen des mindestens einen Treibmittels (T) und der Polymermischung (PM) erfolgt ebenfalls vorzugsweise in dem mindestens einen Mischsegment.

Die Temperatur zum Mischen in Schritt d) wird ebenfalls vom Fachmann gewählt und richtet sich nach der Art der Komponenten (TTP), (F) und (T).

Im Allgemeinen wird das Mischen in Schritt d) bei einer Temperatur von 200 bis 380 °C, bevorzugt bei einer Temperatur von 220 bis 300 °C, mehr bevorzugt bei einer Temperatur von 230 bis 280 °C, durchgeführt.

Die Temperatur in Schritt d) wird ebenfalls in einer bevorzugten Ausführungsform am Mantel des Extruders gemessen, der das Mischsegment umgibt.

Die Schritte c) und d) können dabei gleichzeitig durchgeführt werden. Es ist jedoch auch denkbar, dass Schritt c) vor Schritt d) durchgeführt wird.

Von dem mindestens einen Mischsegment gelangt die Mischung (M) in einer bevorzugten Ausführungsform in das mindestens eine Fördersegment (siehe hierzu nachfolgend auch Schritt e)).

In Schritt e) wird die in Schritt d) erhaltene Mischung (M), vorzugsweise durch eine Schlitz- oder Lochdüse, unter Erhalt des teilkristallinen thermoplastischen Polymerschaums (TTS) extrudiert.

In einer bevorzugten Ausführungsform gelangt die in Schritt d) erhaltene Mischung (M) von dem mindestens einen Mischsegment des Extruders in das mindestens eine Fördersegment des Extruders. Von dem mindestens einen Fördersegment aus gelangt die Mischung (M) dann anschließend vorzugsweise zu der Schlitz- oder Lochdüse, durch die sie extrudiert wird.

Dem Fachmann ist prinzipiell bekannt, wie die Extrusion durch eine Schlitz- oder Lochdüse durchgeführt wird.

Im Fall, dass Verfahrensschritt a) und die Verfahrensschritte b) bis e) jeweils in zwei separaten Extrudern durchgeführt werden, wird Verfahrensschritt a) in einem ersten Extruder (E1) durchgeführt. Das aufgeschmolzene mindestens eine teilkristalline thermoplastische Polymer (TTP) wird dann vorzugsweise in einen zweiten Extruder (E2) geführt, wo die Verfahrensschritte b) bis e) durchgeführt werden unter Erhalt des teilkristallinen thermoplastischen Polymerschaums (TTS).

Ein weiterer Gegenstand der vorliegenden Erfindung ist ein teilkristalliner thermoplastischer Polymerschaum (TTS), erhältlich nach dem vorstehend beschriebenen Verfahren.

Dabei ist es bevorzugt, dass der erfindungsgemäße teilkristalline thermoplastische Polymerschaum (TTS) eine Dichte von < 200 g/l aufweist, mehr bevorzugt eine Dichte von < 150 g/l, besonders bevorzugt eine Dichte von < 120 g/l. Verfahren zur Bestimmung der Dichte des erfindungsgemäßen teilkristallinen thermoplastischen Polymerschaums (TTS) sind dem Fachmann als solche bekannt, üblicherweise erfolgt die Bestimmung der Dichte nach DIN EN 1602, Stand 2013.

Weiterhin ist es bevorzugt, dass der erfindungsgemäße teilkristalline thermoplastische Polymerschaum (TTS) eine Dichte von > 10 g/l aufweist, mehr bevorzugt eine Dichte von > 20 g/l, besonders bevorzugt eine Dichte von > 30 g/l. Verfahren zur Bestimmung der Dichte des erfindungsgemäßen teilkristallinen thermoplastischen Polymerschaums (TTS) sind dem Fachmann als solche bekannt, üblicherweise erfolgt die Bestimmung der Dichte nach DIN EN 1602, Stand 2013.

Der erfindungsgemäße teilkristalline thermoplastische Polymerschaum (TTS) weist üblicherweise eine Schmelztemperatur (T_{M}) auf. Bevorzugt liegt die Schmelztemperatur (T_{M}) des teilkristallinen thermoplastischen Polymerschaums (TTS) im Bereich von 150 bis 350 °C, mehr bevorzugt im Bereich von 180 bis 300 °C und besonders bevorzugt im Bereich von 200 bis 300 °C, bestimmt nach ISO 11357-3:2014.

Ein weiterer Gegenstand der vorliegenden Erfindung ist die Verwendung des erfindungsgemäßen teilkristallinen thermoplastischen Polymerschaums (TTS) zur Herstellung von Folien, Profilen oder Platten.

Nachfolgend wird die vorliegende Erfindung anhand von Beispielen näher erläutert.

### Beispiele

Es werden die folgenden Komponenten eingesetzt:
- teilkristallines thermoplastisches Polymer (TTP)
   (TTP1)Polyamid 6/66 (Ultramid^{®} C35, BASF SE)
- Treibmittel (T)
   (T1) 50 Gew.-% Wasser/40 Gew.-% Ethanol/10 Gew.-% Aceton
   (T2) Aceton
   (T3) Wasser
   (T4) CO₂
- Füllstoff (F)
   (F1) Magnesiumsilicat (Microtalc IT Extra, Mondo Minerals B.V., mittlere Teilchengröße: 2 µm)
   (F2) Calciumcarbonat (Ulmer Weiss XMF, Eduard Merkle GmbH & Co. KG, mittlere Teilchengröße: 3 µm)
   (F3) Calciumsulfat-Hemihydrat (Krone Gips, mittlere Teilchengröße: 10 µm)

### Herstellung der teilkristallinen thermoplastischen Polymerschäume (TTS)

Zur Herstellung der teilkristallinen thermoplastischen Polymerschäume (TTS) wird eine Mischung (M), die die Komponenten (TTP), (T) und (F) enthält, in einem gleichläufigen Zweischneckenextruder ZSK 25 durch eine Lochdüse (Durchmesser: 2 mm) der Firma Werner & Pfleiderer (heute Coperion) extrudiert.

Dazu wird zuerst das teilkristalline thermoplastische Polymer (TTP) im Extruder aufgeschmolzen (Schritt a)). Anschließend werden das aufgeschmolzene teilkristalline thermoplastische Polymer (TTP) und der Füllstoff (F) unter Erhalt einer Polymermischung (PM) darin gemischt (Schritt b)). Danach wird kontinuierlich das mindestens eine Treibmittel (T) zu der Polymermischung (PM) zudosiert (Schritt c)), wobei die Polymermischung (PM) und das Treibmittel (T) gemischt werden unter Erhalt der Mischung (M). Diese wird dann unter Erhalt des teilkristallinen thermoplastischen Polymerschaums (TTS) durch die Lochdüse des Extruders extrudiert.

Die Extrusion wird bei einer Temperatur im Bereich von 230 bis 260 °C durchgeführt.

In den nachfolgenden Tabellen 1 bis 5 sind die eingesetzten Mengen an (TTP), (T) und (F) in den Mischungen (M) sowie die Dichten der hergestellten teilkristallinen thermoplastischen Polymerschäume (TTS) dargestellt. Die Beispiele V1 bis V15 sind Vergleichsbeispiele, die Beispiele E1 bis E22 sind erfindungsgemäße Beispiele.

Die Dichten der hergestellten teilkristallinen thermoplastischen Polymerschäume (TTS) werden nach DIN EN 1602, Stand 2013, bestimmt.

**Tabelle 1**

| **Beispiel** | **V1** | **V2** | **V3** | **V4** | **V5** | **V6** |
|---|---|---|---|---|---|---|
| Komponente (TTP1)[Gew.-%] | 90 | 90 | 90 | 90 | 90 | 90 |
| Komponente (F1) [Gew.-%] | 0,9 | 0,9 | | | | |
| Komponente (F2) [Gew.-%] | | | 0,9 | | | |
| Komponente (F3) [Gew.-%] | | | | 0,9 | 0,9 | 0,9 |
| Komponente (T1) [Gew.-%] | 9,1 | | | 9,1 | | |
| Komponente (T2) [Gew.-%] | | | | | 9,1 | |
| Komponente (T3) [Gew.-%] | | 9,1 | 9,1 | | | 9,1 |
| **Dichte [g/l]** | **227** | **242** | **201** | **338** | **387** | **402** |

**Tabelle 2**

| **Beispiel** | **V7** | **V8** | **V9** | **V10** | **V11** | **V12** | **V13** | **V14** | **V15** |
|---|---|---|---|---|---|---|---|---|---|
| Komponente (TTP1)[Gew.-%] | 86,2 | 86,2 | 86,2 | 86,2 | 86,2 | 86,2 | 86,2 | 86,2 | 86,2 |
| Komponente (F1) [Gew.-%] | 4,7 | 4,7 | 4,7 | | | | | | |
| Komponente (F2) [Gew.-%] | | | | 4,7 | 4,7 | 4,7 | | | |
| Komponente (F3) [Gew.-%] | | | | | | | 4,7 | 4,7 | 4,7 |
| Komponente (T1) [Gew.-%] | 9,1 | | | 9,1 | | | 9,1 | | |
| Komponente (T2) [Gew.-%] | | 9,1 | | | 9,1 | | | 9,1 | |
| Komponente (T3) [Gew.-%] | | | 9,1 | | | 9,1 | | | 9,1 |
| **Dichte [g/l]** | **222** | **232** | **261** | **219** | **213** | **220** | **415** | **374** | **388** |

**Tabelle 3**

| **Beispiel** | **E1** | **E2** | **E3** | **E4** | **E5** | **E6** | **E7** | **E8** | **E9** |
|---|---|---|---|---|---|---|---|---|---|
| Komponente (TTP1)[Gew.-%] | 81,8 | 81,8 | 81,8 | 81,8 | 81,8 | 81,8 | 81,8 | 81,8 | 81,8 |
| Komponente (F1) [Gew.-%] | 9,1 | 9,1 | 9,1 | | | | | | |
| Komponente (F2) [Gew.-%] | | | | 9,1 | 9,1 | 9,1 | | | |
| Komponente (F3) [Gew.-%] | | | | | | | 9,1 | 9,1 | 9,1 |
| Komponente (T1) [Gew.-%] | 9,1 | | | 9,1 | | | 9,1 | | |
| Komponente (T2) [Gew.-%] | | 9,1 | | | 9,1 | | | 9,1 | |
| Komponente (T3) [Gew.-%] | | | 9,1 | | | 9,1 | | | 9,1 |
| **Dichte [g/l]** | **73** | **68** | **66** | **43** | **46** | **55** | **127** | **165** | **67** |

Beim Vergleich der Beispiele V1 bis V15 und E1 bis E9 aus den Tabellen 1 bis 3 wird deutlich, dass sich die Mischung (M) ab einem bestimmten Mindestgehalt an Füllstoff (F) (9,1 Gew.-%) zu teilkristallinen thermoplastischen Polymerschäumen (TTS) mit einer Dichte < 200 g/l extrudieren lässt.

**Tabelle 4**

| **Beispiel** | **E10** | **E11** | **E12** | **E13** | **E14** | **E15** | **E16** | **E17** | **E18** |
|---|---|---|---|---|---|---|---|---|---|
| Komponente (TTP1)[Gew.-%] | 78,9 | 78,9 | 78,9 | 78,9 | 78,9 | 78,9 | 78,9 | 78,9 | 78,9 |
| Komponente (F1) [Gew.-%] | 8,8 | 8,8 | 8,8 | | | | | | |
| Komponente (F2) [Gew.-%] | | | | 8,8 | 8,8 | 8,8 | | | |
| Komponente (F3) [Gew.-%] | | | | | | | 8,8 | 8,8 | 8,8 |
| Komponente (T1) [Gew.-%] | 12,3 | | | 12,3 | | | 12,3 | | |
| Komponente (T2) [Gew.-%] | | 12,3 | | | 12,3 | | | 12,3 | |
| Komponente (T3) [Gew.-%] | | | 12,3 | | | 12,3 | | | 12,3 |
| **Dichte [g/l]** | **43** | **43** | **39** | **41** | **45** | **37** | **188** | **167** | **44** |

**Tabelle 5**

| **Beispiel** | **E19** | **E20** | **E22** |
|---|---|---|---|
| Komponente (TTP1)[Gew.-%] | 78,9 | 78,9 | 78,9 |
| Komponente (F1) [Gew.-%] | 8,8 | | |
| Komponente (F2) [Gew.-%] | | 8,8 | |
| Komponente (F3) [Gew.-%] | | | 8,8 |
| Komponente (T4) [Gew.-%] | 12,3 | 12,3 | 12,3 |
| **Dichte [g/l]** | **39** | **37** | **192** |

Die erfindungsgemäßen Beispiele E10 bis E22 aus den Tabellen 4 und 5 zeigen, dass sich die Mischung (M) bei 8,8 Gew.-% Füllstoff und 12,3 Gew.-% Treibmittel zu teilkristallinen thermoplastischen Polymerschäumen (TTS) mit einer Dichte < 200 g/l extrudieren lässt. In den Beispielen E10 bis E18 werden als Treibmittel eine Mischung aus 50 Gew.-% Wasser/40 Gew.-% Ethanol/10 Gew.-% Aceton (T1), Aceton (T2) oder Wasser (T3) eingesetzt. In den Beispielen E19 bis E22 wird CO₂ (T4) als Treibmittel eingesetzt.

## Patentansprüche

1. Verfahren zur kontinuierlichen Herstellung eines teilkristallinen thermoplastischen Polymerschaums (TTS) durch Extrusion einer Mischung (M), **dadurch gekennzeichnet, dass** die Mischung (M) die Komponenten
a) mindestens ein teilkristallines thermoplastisches Polymer (TTP),
b) mindestens ein Treibmittel (T) und
c) mindestens 8 Gew.-%, bezogen auf das Gesamtgewicht der Mischung (M), mindestens eines mineralischen Füllstoffs (F)
enthält, wobei die Mischung (M) die Komponenten
a) 45 bis 87 Gew.-% mindestens eines teilkristallinen thermoplastischen Polymers (TTP), bezogen auf das Gesamtgewicht der Mischung (M),
b) 5 bis 20 Gew.-% mindestens eines Treibmittels (T), bezogen auf das Gesamtgewicht der Mischung (M), und
c) 8 bis 35 Gew.-% mindestens eines mineralischen Füllstoffs (F), bezogen auf das Gesamtgewicht der Mischung (M),
enthält.

2. Verfahren gemäß Anspruch 1, **dadurch gekennzeichnet, dass** das Verfahren die folgenden Schritte umfasst:
a) Aufschmelzen des mindestens einen teilkristallinen thermoplastischen Polymers (TTP),
b) Mischen des mindestens einen aufgeschmolzenen teilkristallinen thermoplastischen Polymers (TTP) aus Schritt a) und des mindestens einen mineralischen Füllstoffs (F) unter Erhalt einer Polymermischung (PM),
c) Kontinuierliche Zudosierung des mindestens einen Treibmittels (T) zu der Polymermischung (PM) aus Schritt b),
d) Mischen des mindestens einen Treibmittels (T) und der Polymermischung (PM) unter Erhalt der Mischung (M),
e) Extrusion der Mischung (M) aus Schritt d) unter Erhalt eines teilkristallinen thermoplastischen Polymerschaums (TTS).

3. Verfahren gemäß Anspruch 1 oder 2, **dadurch gekennzeichnet, dass** das mindestens eine Treibmittel (T) ausgewählt ist aus der Gruppe bestehend aus Wasser, aliphatischen Alkoholen, aliphatischen Ketonen und Kohlenstoffdioxid, bevorzugt aus Wasser, aliphatischen Alkoholen und aliphatischen Ketonen.

4. Verfahren gemäß einem der Ansprüche 1 bis 3, **dadurch gekennzeichnet, dass**
i) der mindestens eine mineralische Füllstoff (F) ausgewählt ist aus der Gruppe bestehend aus Carbonaten, Silicaten, Phosphaten und Sulfaten, bevorzugt aus der Gruppe bestehend aus Calciumcarbonat, Gips und Talkum, mehr bevorzugt aus Calciumcarbonat und Talkum, und/oder
ii) der mindestens eine mineralische Füllstoff (F) eine mittlere Teilchengröße, bestimmt durch Siebanalyse nach DIN 66165, von ≤ 30 µm, bevorzugt von ≤ 15 µm, mehr bevorzugt von ≤ 10 µm, aufweist.

5. Verfahren gemäß einem der Ansprüche 1 bis 4, **dadurch gekennzeichnet, dass**
i) die Mischung (M) mindestens 8 Gew.-%, bezogen auf das Gesamtgewicht der Mischung (M), des mindestens einen Treibmittels (T) enthält, und/oder
ii) die Mischung (M) höchstens 17,5 Gew.-%, bezogen auf das Gesamtgewicht der Mischung (M), des mindestens einen Treibmittels (T) enthält.

6. Verfahren gemäß einem der Ansprüche 1 bis 5, **dadurch gekennzeichnet, dass**
i) die Mischung (M) mindestens 10 Gew.-%, bezogen auf das Gesamtgewicht der Mischung (M), des mindestens einen mineralischen Füllstoffs (F) enthält, und/oder
ii) die Mischung (M) höchstens 25 Gew.-%, besonders bevorzugt höchstens 15 Gew.-%, bezogen auf das Gesamtgewicht der Mischung (M), des mindestens einen mineralischen Füllstoffs (F) enthält.

7. Verfahren gemäß einem der Ansprüche 1 bis 6, **dadurch gekennzeichnet, dass**
i) der teilkristalline thermoplastische Polymerschaum (TTS) eine Dichte von < 200 g/l aufweist, bevorzugt von < 150 g/l, mehr bevorzugt von < 120 g/l, und/oder
ii) der teilkristalline thermoplastische Polymerschaum (TTS) eine Schmelztemperatur (T_{M}), gemessen gemäß der Beschreibung, im Bereich von 150 bis 350 °C aufweist, bevorzugt im Bereich von 180 bis 300 °C, mehr bevorzugt im Bereich von 200 bis 300 °C.

8. Verfahren gemäß einem der Ansprüche 1 bis 7, **dadurch gekennzeichnet, dass**
i) das mindestens eine teilkristalline thermoplastische Polymer (TTP) ausgewählt ist aus der Gruppe bestehend aus Polyamiden, Polyestern, Polycarbonaten, Polyolefinen, Polyurethanen, Polyethern und Polyoxymethylen, bevorzugt aus Polyestern und Polyamiden, mehr bevorzugt aus Polyamiden, und/oder
ii) das mindestens eine teilkristalline thermoplastische Polymer (TTP) eine Glasübergangstemperatur (T_{G}), gemessen gemäß der Beschreibung, von < 100 °C, bevorzugt von < 80 °C, mehr bevorzugt von < 60 °C, aufweist, und/oder
iii) das mindestens eine teilkristalline thermoplastische Polymer (TTP) eine Schmelztemperatur (T_{M}), gemessen gemäß der Beschreibung, von > 100 °C, bevorzugt von > 150 °C, mehr bevorzugt von > 200 °C, aufweist, und/oder
iv) das mindestens eine teilkristalline thermoplastische Polymer (TTP) eine Schmelzviskosität im Bereich von 10¹ bis 10³ Pa x s aufweist, gemessen bei einer Schergeschwindigkeit zwischen 10² und 10³ 1/s gemäss ISO 11443:2005-03.

9. Verfahren gemäß einem der Ansprüche 1 bis 8, **dadurch gekennzeichnet, dass** die Polymermischung (PM) eine Schmelzviskosität im Bereich von 10² bis 10³ Pa x s aufweist, gemessen bei einer Schergeschwindigkeit zwischen 10² und 10³ 1/s gemäss ISO 11443:2005-03.

10. Teilkristalliner thermoplastischer Polymerschaum (TTS) erhältlich nach einem Verfahren gemäß einem der Ansprüche 1 bis 9.

11. Verwendung des teilkristallinen thermoplastischen Polymerschaums (TTS) gemäß Anspruch 10 zur Herstellung von Folien, Profilen oder Platten.

## Claims

1. A process for the continuous production of a partially crystalline thermoplastic polymer foam (TTS) by extrusion of a mixture (M), wherein the mixture (M) comprises the components
a) at least one partially crystalline thermoplastic polymer (TTP),
b) at least one blowing agent (T) and
c) at least 8% by weight, based on the total weight of the mixture (M), of at least one mineral filler (F),
where the mixture (M) comprises the components
a) from 45 to 87% by weight of at least one partially crystalline thermoplastic polymer (TTP), based on the total weight of the mixture (M),
b) from 5 to 20% by weight of at least one blowing agent (T), based on the total weight of the mixture (M), and
c) from 8 to 35% by weight of at least one mineral filler (F), based on the total weight of the mixture (M).

2. The process according to claim 1, wherein the process comprises the following steps:
a) melting of the at least one partially crystalline thermoplastic polymer (TTP),
b) mixing of the at least one molten partially crystalline thermoplastic polymer (TTP) from step a) and the at least one mineral filler (F) to give a polymer mixture (PM),
c) continuous addition of the at least one blowing agent (T) to the polymer mixture (PM) from step b),
d) mixing of the at least one blowing agent (T) and the polymer mixture (PM) to give the mixture (M),
e) extrusion of the mixture (M) from step d) to give a partially crystalline thermoplastic polymer foam (TTS).

3. The process according to claim 1 or 2, wherein the at least one blowing agent (T) is selected from the group consisting of water, aliphatic alcohols, aliphatic ketones and carbon dioxide, preferably from among water, aliphatic alcohols and aliphatic ketones.

4. The process according to any of claims 1 to 3, wherein
i) the at least one mineral filler (F) is selected from the group consisting of carbonates, silicates, phosphates and sulfates, preferably from the group consisting of calcium carbonate, gypsum and talc, more preferably from among calcium carbonate and talc, and/or
ii) the at least one mineral filler (F) has an average particle size, determined by sieve analysis in accordance with DIN 66165, of ≤ 30 µm, preferably ≤ 15 µm, more preferably ≤ 10 µm.

5. The process according to any of claims 1 to 4, wherein
i) the mixture (M) comprises at least 8% by weight, based on the total weight of the mixture (M), of the at least one blowing agent (T), and/or
ii) the mixture (M) comprises not more than 17.5% by weight, based on the total weight of the mixture (M), of the at least one blowing agent (T) .

6. The process according to any of claims 1 to 5, wherein
i) the mixture (M) comprises at least 10% by weight, based on the total weight of the mixture (M), of the at least one mineral filler (F) and/or
ii) the mixture (M) comprises not more than 25% by weight, particularly preferably not more than 15% by weight, based on the total weight of the mixture (M), of the at least one mineral filler (F) .

7. The process according to any of claims 1 to 6, wherein
i) the partially crystalline thermoplastic polymer foam (TTS) has a density of < 200 g/l, preferably < 150 g/l, more preferably < 120 g/l, and/or
ii) the partially crystalline thermoplastic polymer foam (TTS) has a melting point (T_{M}), measured as indicated in the description, in the range from 150 to 350°C, preferably in the range from 180 to 300°C, more preferably in the range from 200 to 300°C.

8. The process according to any of claims 1 to 7, wherein
i) the at least one partially crystalline thermoplastic polymer (TTP) is selected from the group consisting of polyamides, polyesters, polycarbonates, polyolefins, polyurethanes, polyethers and polyoxymethylene, preferably from among polyesters and polyamides, more preferably from among polyamides, and/or
ii) the at least one partially crystalline thermoplastic polymer (TTP) has a glass transition temperature (T_{G}), measured as indicated in the description, of < 100°C, preferably < 80°C, more preferably < 60°C, and/or
iii) the at least one partially crystalline thermoplastic polymer (TTP) has a melting point (T_{M}), measured as indicated in the description, of > 100°C, preferably > 150°C, more preferably > 200°C, and/or
iv) the at least one partially crystalline thermoplastic polymer (TTP) has a melt viscosity in the range from 10¹ to 10³ Pa x s, measured at a shear rate in the range from 10² to 10³ 1/s in accordance with ISO 11443:2005-03.

9. The process according to any of claims 1 to 8, wherein the polymer mixture (PM) has a melt viscosity in the range from 10² to 10³ Pa x s, measured at a shear rate in the range from 10² to 10³ 1/s in accordance with ISO 11443:2005-03.

10. A partially crystalline thermoplastic polymer foam (TTS) obtainable by a process according to any of claims 1 to 9.

11. The use of the partially crystalline thermoplastic polymer foam (TTS) according to claim 10 for producing films, profiles or plates.

## Revendications

1. Procédé pour la production continue d'une mousse polymère thermoplastique partiellement cristalline (TTS) par extrusion d'un mélange (M), **caractérisé en ce que** le mélange (M) contient les composants
a) au moins un polymère thermoplastique partiellement cristallin (TTP),
b) au moins un agent gonflant (T) et
c) au moins 8% en poids, par rapport au poids total du mélange (M), d'au moins une charge minérale (F)
le mélange (M) contenant les composants
a) 45 à 87% en poids d'au moins un polymère thermoplastique partiellement cristallin (TTP), par rapport au poids total du mélange (M),
b) 5 à 20% en poids d'au moins un agent gonflant (T), par rapport au poids total du mélange (M), et
c) 8 à 35% en poids d'au moins une charge minérale (F), par rapport au poids total du mélange (M).

2. Procédé selon la revendication 1, **caractérisé en ce que** le procédé comprend les étapes suivantes :
a) fusion dudit au moins un polymère thermoplastique partiellement cristallin (TTP),
b) mélange dudit au moins un polymère thermoplastique partiellement cristallin (TTP) fondu de l'étape a) et de ladite au moins une charge minérale (F) avec obtention d'un mélange polymère (PM),
c) dosage continu dudit au moins un agent gonflant (T) dans le mélange polymère (PM) de l'étape b),
d) mélange dudit au moins un agent gonflant (T) et du mélange polymère (PM) avec obtention du mélange (M),
e) extrusion du mélange (M) de l'étape d) avec obtention d'une mousse polymère thermoplastique partiellement cristalline (TTS).

3. Procédé selon la revendication 1 ou 2, **caractérisé en ce que** ledit au moins un agent gonflant (T) est choisi dans le groupe constitué par l'eau, les alcools aliphatiques, les cétones aliphatiques et le dioxyde de carbone, de préférence parmi l'eau, les alcools aliphatiques et les cétones aliphatiques.

4. Procédé selon l'une quelconque des revendications 1 à 3, **caractérisé en ce que**
i) ladite au moins une charge minérale (F) est choisie dans le groupe constitué par les carbonates, les silicates, les phosphates et les sulfates, de préférence dans le groupe constitué par le carbonate de calcium, le gypse et le talc, plus préférablement parmi le carbonate de calcium et le talc et/ou
ii) ladite au moins une charge minérale (F) présente une grosseur moyenne de particule, déterminée par analyse par tamisage selon la norme DIN 66165, ≤ 30 µm, de préférence ≤ 15 µm, plus préférablement ≤ 10 µm.

5. Procédé selon l'une quelconque des revendications 1 à 4, **caractérisé en ce que**
i) le mélange (M) contient au moins 8% en poids, par rapport au poids total du mélange (M), dudit au moins un agent gonflant (T) et/ou
ii) le mélange (M) contient au plus 17,5% en poids, par rapport au poids total du mélange (M), dudit au moins un agent gonflant (T).

6. Procédé selon l'une quelconque des revendications 1 à 5, **caractérisé en ce que**
i) le mélange (M) contient au moins 10% en poids, par rapport au poids total du mélange (M), de ladite au moins une charge minérale (F) et/ou
ii) le mélange (M) contient au plus 25% en poids, de manière particulièrement préférée au plus 15% en poids, par rapport au poids total du mélange (M), de ladite au moins une charge minérale (F).

7. Procédé selon l'une quelconque des revendications 1 à 6, **caractérisé en ce que**
i) la mousse polymère thermoplastique partiellement cristalline (TTS) présente une densité < 200 g/l, de préférence < 150 g/l, plus préférablement < 120 g/l,
ii) la mousse polymère thermoplastique partiellement cristalline (TTS) présente une température de fusion (T_{M}), mesurée selon la description dans la plage de 150 à 350°C, de préférence dans la plage de 180 à 300°C et plus préférablement dans la plage de 200 à 300°C.

8. Procédé selon l'une quelconque des revendications 1 à 7, **caractérisé en ce que**
i) ledit au moins un polymère thermoplastique partiellement cristallin (TTP) est choisi dans le groupe constitué par les polyamides, les polyesters, les polycarbonates, les polyoléfines, les polyuréthanes, les polyéthers et le polyoxyméthylène, de préférence parmi les polyesters et les polyamides, plus préférablement parmi les polyamides et/ou
ii) ledit au moins un polymère thermoplastique partiellement cristallin (TTP) présente une température de transition vitreuse (T_{G}), mesurée selon la description, < 100°C, de préférence < 80°C, plus préférablement < 60°C et/ou
iii) ledit au moins un polymère thermoplastique partiellement cristallin (TTP) présente une température de fusion (T_{M}), mesurée selon la description, > 100°C, de préférence > 150°C, plus préférablement > 200°C et/ou
iv) ledit au moins un polymère thermoplastique partiellement cristallin (TTP) présente une viscosité de masse fondue dans la plage de 10¹ à 10³ Pa.s, mesurée à une vitesse de cisaillement entre 10² et 10³ 1/s selon la norme ISO 11443:2005-03.

9. Procédé selon l'une quelconque des revendications 1 à 8, **caractérisé en ce que** le mélange polymère (PM) présente une viscosité de masse fondue dans la plage de 10² à 10³ Pa.s, mesurée à une vitesse de cisaillement entre 10² et 10³ 1/s selon la norme ISO 11443:2005-03.

10. Mousse polymère thermoplastique partiellement cristalline (TTS) pouvant être obtenue par un procédé selon l'une quelconque des revendications 1 à 9.

11. Utilisation de la mousse polymère thermoplastique partiellement cristalline (TTS) selon la revendication 10 pour la production de feuilles, de profilés ou de plaques.
